# EUROPEAN PATENT APPLICATION

(11) **EP 3 506 171 A1**
(43) Date of publication of application: **03.07.2019**
(21) Application number: 16914058.9
(22) Date of filing: 19.12.2016
(51) Int. Cl.: G06K 19/077, H01Q 1/22

(54) **IMPLANTABLE ELECTRONIC TAG FOR TIRE AND ASSEMBLY PROCESS**

(30) Priority: 26.08.2016 CN 201610744243
(71) Applicant: Shanghai Inesa Intelligent Electronics Co., Ltd., Shanghai 201206 (CN)
(72) Inventor: HONG, Bin, Shanghai 201206 (CN); YANG, Huifeng, Shanghai 201206 (CN); Li, Xinhua, Shanghai 201206 (CN)
(74) Representative: Schweiger, Martin
(86) International application number: PCT/CN2016/110800
(87) International publication number: WO 2018/036038

(57) **Abstract**

An implantable electronic tag (100) for a tire and an assembly process. The electronic tag (100) mainly comprises: an antenna (102); a radio frequency chip module (101); and a connection terminal (103). The radio frequency chip module (101) has an electrode (101b) provided thereon. The connection terminal (103) has one end connected to the antenna (102) and another end in cold-press connection with the electrode (101b) of the radio frequency chip module (101). Upon assembly, a radio frequency chip is encapsulated to form the radio frequency chip module (101). The connection terminal (103) is initially riveted to the antenna (102) and then connected to the electrode (101b) of the encapsulated body by means of cold-pressing. The radio frequency chip module (101) connected to the antenna (102) is encapsulated. The implantable electronic tag (100) for a tire is an ultra-high frequency, readable and writable radio frequency tag. The electronic tag is compliant with HG/T 4953-4956-2016 standards for tire radio frequency identification (RFID) tag mechanical implantation methods, performance test methods and coding.

## Description

### Technical field

The present invention relates to an electronic tag/label, and in particular to a radio frequency identification (RFID) electronic tag for tire use.

### Background

The theme of tire development in the 21st century will be humanization. Its connotation includes intelligent convenience and green safety. In the past 10 years, big tire manufacturers led by Michelin have developed a variety of smart tire technologies and products. A revolution of its own will also lead to changes in tire manufacturing process and production equipment, so that the tires have more wisdom and make human safer.

It can be seen that with the development of the information age, the application of radio frequency identification (RFID) system to tires for real-time monitoring of tire usage has become the trend of today's tires. The existing technology has applied radio frequency identification technology to the field of tire monitoring. A patch-type electronic tag has appeared on the market, which is composed of IC chip electrically connected to an aluminum film antenna, and the thickness thereof is very thin, and is conveniently encapsulated/packaged in, for example, silicone, rubber and other materials, but the shortcomings of the patch-type electronic label are also very obvious. The tires of running cars constantly rotate to generate a large amount of static electricity, and the anti-static performance of such electronic labels is not good.

A series of improved radio frequency identification (RFID) electronic tags for tires have been designed for this situation, for example, Chinese utility model patent publication No. CN 205176910U, and Chinese invention patent publication No. CN 105320985A, disclosing solutions for electronic tags for tires.

This type of tire electronic tag is mainly composed of a radio frequency chip and a spring antenna, and a Tin welding/soldering method is generally adopted for connection between the spring antenna and the radio frequency chip. However, the melting point of Tin is lower, the conversion temperature of conventional welding Tin (solder) is 150-180 degrees Celsius (° C), and the conversion temperature of high-temperature solder is 180-200 degrees Celsius. The electronic tag being implanted in the tire needs to withstand a high temperature of at least 200 degrees Celsius for several tens of minutes. This is clearly specified in the international standard HG/T 4953∼4956-2016 for tire radio frequency identification (RFID) electronic tag mechanical implantation method, performance test method and coding.

In a conventional tire electronic tag an antenna and a chip need to be soldered by Tin-welding/soldering, therefore, the surface of the antenna is usually provided with a gold plating layer, which is suitable for soldering. However, a combination of the gold plating layer and the rubber is not optimal, and it is easy to cause rubber delamination, which may cause serious hidden danger for safety of the tire.

### Summary of the invention

In view of the problems existing in current tire electronic tags, an object of the present invention is to provide a highly reliable implantable electronic tag for a tire; and at the same time, a corresponding assembly process for the electronic tag is provided.

In order to achieve the above object, the present invention adopts the following technical solutions:
In one aspect, an implantable electronic tag for tire is provided, the electronic tag comprising:
An antenna;
A radio frequency chip module having electrodes thereon; and
A connection terminal, one end of which is connected to the antenna at one end, and the other end is in cold-press and connection to the electrode of the radio frequency chip module.

Preferably, the antenna is a spring-type antenna.

Preferably, the surface of the antenna is provided with a copper-zinc alloy plating layer.

Preferably, the radio frequency chip module is an integrated encapsulation structure, formed, for example, by molding-encapsulating a radio frequency chip.

Preferably, the connection terminal is in press-fix connection with the antenna through cold-pressing.

Preferably, the connection terminal is a cold-press connecting tube.

Preferably, the connection terminal is a metal press-fix piece, and the electrode of the antenna and the electrode on the radio frequency chip module are enwrapped in the metal press-fix piece by cold-pressing method, and are fixed by the cold-pressing method.

Preferably, the metal press-fix piece is a pre-press forming metal piece, and has a structure of "middle in Chinese character" shape, and its upper and lower positions are connected with ribs, and are connected with other metal press-fix pieces in whole row structure, and the ribs are cut after the press-fix process; The two metal pieces in the left and right side are bent and surrounded by a mechanical device, and the electrodes of the chip and the electrodes of the antenna are surrounded, then clamped and fixed.

Preferably, the electronic tag further comprises a component/assembly for encapsulation, the encapsulation component enclosing the electronic tag.

Preferably, the encapsulation component comprises a covering/coating layer covering the antenna, the radio frequency chip module and the connection terminal.

The covering layer is formed by laminating two layers of planar rubber layers.

Preferably, the covering layer is composed of natural rubber which has not been vulcanized, and a protective film is provided on the surface of the covering layer.

Preferably, the encapsulation component further includes a heat shrink sleeve that encloses the radio frequency chip module and the connection terminal in the electronic tag.

Preferably, a surface of the heat shrinkable sleeve is provided with a plurality of small holes.

Furthermore, another sort of implantable electronic tag for a tire is provided, the electronic tag comprising an antenna and a radio frequency chip module, the radio frequency chip module having electrodes thereon, and the electrodes of the antenna and the radio frequency chip module are soldered and fixed for connection by laser welding or arc welding.

In another aspect, an assembly process for implantable electronic tag for a tire is provided, comprising:
Encapsulating the radio frequency chip to form a radio frequency chip module;
Connecting electrodes of the antenna and the encapsulation by a method of cold pressing;
A heat shrinkable sleeve being placed at the radio frequency chip module, and the heat shrinkable sleeve is heated by hot air to tightly encapsulate the radio frequency chip module and connection portions of the electrodes;
Positioning the finished component to the lower cover layer, symmetrizing their centers, and fixing them to the surface of the lower cover layer;
Aligning the upper cover layer with the lower cover layer to completely enwrap the component; and
The upper and lower cover layers being pressed tightly for a suitable time for completely bonding them.

The implantable electronic tag for a tire provided by the invention can withstand the high temperature of 300 degrees Celsius without any damage, and the stability and reliability of the electronic tag in production and use can be ensured. At the same time, the copper-zinc coating specially designed for rubber vulcanization makes the combination of the antenna and rubber stronger, ensuring the quality and service life of the tire.

Furthermore, the implantable electronic tag for a tire provided by the present invention is an ultra-high frequency, readable and writable radio frequency tag, which conforms to HG/T 4953-4956-2016 standards for the tire radio frequency identification (RFID) electronic tag mechanical implantation methods, performance test methods and coding.

### Description on Drawings

The invention is further described below in conjunction with the drawings and specific embodiments.
FIG 1 is a structural sketch of the implantable electronic tag for a tire of the present invention;
FIG 2 a structural sketch of the chip package (body) of the present invention;
FIG 3 is a structural sketch of the terminal to the present invention;
FIG 4 is a structural sketch of the antenna of the present invention.

### Embodiments

In order to make the technical means, creative features, achievement goals and effects achieved by the present invention easy to be understood, the present invention will be further described below in conjunction with specific figures.

### Example 1

This example provides an ultra-high frequency, readable and writable implantable electronic tag for a tire that is a passive backscatter tag conforming to ISO/IEC 18000-63 for air interface requirements and operates in a frequency band covering 902 MHz-928 MHz.

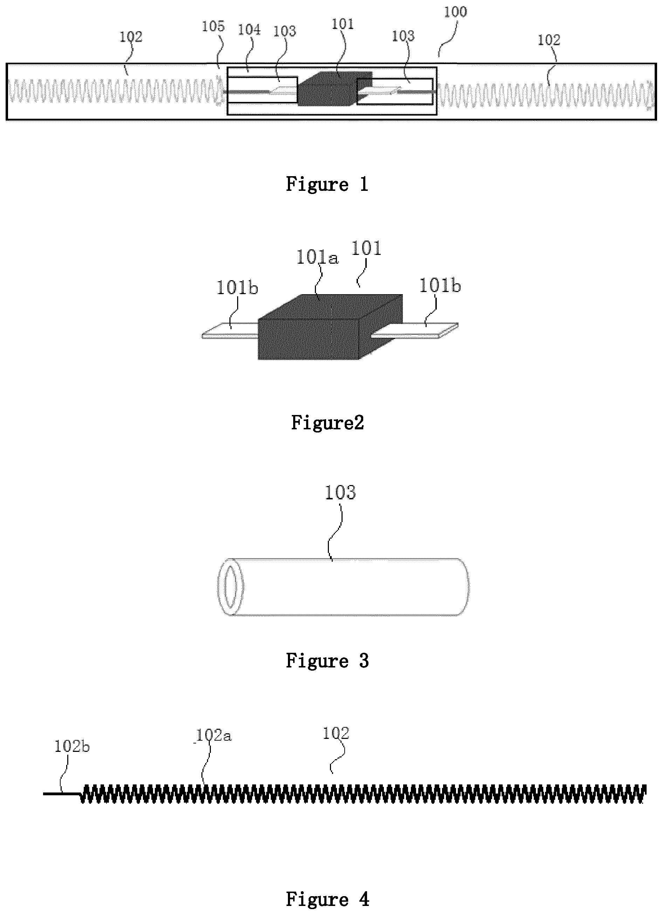

Referring to Figure 1, there is shown a schematic structural view of the implantable electronic tag for a tire. As can be seen from the figure, the radio frequency tag 100 is mainly composed of chip module 101 , two antennas 102 , two connection terminals 103 , heat shrinkable sleeve 104, and covering layer 105 .

Referring to Figure 2, the chip module 101 in the tag is specifically chip encapsulation, and is formed from the radio frequency chip by a high-reliability molded encapsulating, and two electrodes suitable for electrical connection are drawn forth at both ends of the module.

In this example, the radio frequency chip is mold- encapsulated into a special molding encapsulation by use of HIG-3 of ALIEN Corporation .The chip operates in the frequency from 902 MHZ to 928 MHZ.

The encapsulation body thus formed includes encapsulation main body 101a having a rectangular structure and electrodes 101b symmetrically distributed on both end faces of the encapsulation main body 101a. The electrode 101b is a flat rectangular structure as a whole, one end thereof being electrically connected to the radio frequency chip in the encapsulation main body 101a, and another end protruding from the encapsulation main body 101a. It should be noted that the scheme of the chip module in this example is not limited thereto, and the specific structure may be changed according to actual needs, for example, structure of a radio frequency chip, structure of encapsulation body, and the electrode's structure may be changed according to actual needs, as long as good stability and reliability of the chip module can be ensured or guaranteed.

Referring to Figures 1 and 3, the connection terminal 103 in the present tag is used to connect the chip module 101 and the antenna 102. Two antennas 102 can electrically connect or communicate with two electrodes 101b of the chip module 101 by two connection terminals 103, respectively.

In a specific implementation, the terminal 103 is a cold-press connecting tube, preferably a copper cold-press connecting pipe, which is specifically a hollow cylindrical structure, the outer diameter of the cylinder being between 0.8-1.5 mm, its wall thickness being 0.15-0.25 mm, and its length being between 3-6 mm. This example preferably has an outer diameter of 1.0 mm, an inner diameter of 0.75 mm, and a length of 4 mm.

Because of such a cold-press connecting tube 103 it can be achieved that electrodes of the chip module and the antenna can be in a pressure-combination/ compression-joint connection. Specifically, one end of the cold-press connecting tube 103 is initially connected and fixed to antennas 102 by rivet connection or by cold-pressing, and its another end is in a press-fix (pressing and combining) way fixed to the electrodes 101b of the encapsulation body by cold-pressing .

Referring to Figures 1 and 4, in the tag the two antennas 102 specifically is a pair of independent spring-type antennas, located on both sides of the chip module 101, and are communicated through the two electrodes 101b of the chip module 103 and the terminals 101.

One end of one antenna 102 in one side in this example has a linear electrode, and it is mainly made of stainless steel with a wire diameter of 0.15-0.3mm, comprising two parts of spring body 102a and electrode 102b.

Wherein the length of the spring body 102a is 38-45 mm, its diameter, 0.10-0.35mm diameter, its spring diameter, 1.1-1.5mm, its screw pitch of 0.5-1mm; preferably, the length is 38mm, the antenna diameter, 0.25mm, the springs diameter, 1.2mm, and the screw pitch , 0.7mm.

The electrode 102b is a straight section for connection to the connection terminal 103. The length of the electrode 102b is 2-3mm, preferably, 2.5mm.

In addition, a copper-zinc alloy plating layer is disposed on the surface of the spring-type antenna 102, and the bonding strength between the antenna and the rubber is enhanced by the copper-zinc alloy plating layer, thereby ensuring the quality and service life of a tire.

The spring-type antenna in this structure, the length of the antenna can effectively be controlled, generally between 60-100mm, a resonance of 860-960 MHz can be achieved.

At the same time, such spring-type antenna structure can make the antenna have good flexibility and ductility. When applied in a tire, it can be deformed with deformation of the tire rubber, does not affect performance of the antenna, and not easily damaged.

The specific technical solution of the two spring antennas 102 connected to the two electrodes 101b of the chip module 101 through the connection terminals 103 is as follows:
According to the size of the spring antenna and the electrodes on the chip module, a cold-press connecting tube with a suitable size is selected;
Electrodes 101b of of the encapsulation body (i.e. the chip module) and the electrode 102b of the antenna 102 are respectively inserted into cavities at both ends of the cold-press connecting tube 103 (i.e. the connection terminals), and are pressured in a point or spot shape from the outside of the cold-press connecting tube by a cold press tool; thus the cold-press connecting tube is locally deformed, and the electrodes placed inside the cold-press connecting tube are firmly pressed and connected, and are reliably and conductively connected.

In this example, an electrical connection of conductors is achieved by use of cold-press connection method, thus the effect of withstanding high temperature can be obtained, the connection point is not damaged in a high-temperature environment, the conductivity effect is excellent, and the conductivity resistance or on-resistance is small.

Referring to FIG. 1, the heat shrinkable sleeve 104 and the covering layer 105 in the present tag cooperate to form a encapsulation component/assembly for constituting a double layer coating or package on the chip module 101 to which the antenna 102 is connected, thereby improving the reliability of the entire tag.

Wherein the heat shrinkable sleeve 104 is a black heat shrinkable sleeve having a length of 10 mm and a diameter of 3 mm, and the surface of the black heat shrinkable sleeve is provided with a plurality of small holes, which are preferably evenly distributed in the surface of the black heat shrinkable sleeve.

The black heat shrinkable sleeve of the structure is sleeved on the encapsulation body of the chip module 101 and the connection terminals 103 on both sides thereof, and the chip module 101 and the terminals 103 at both ends thereof are covered by hot air shrinkage to form a first layer cladding. The first heat shrinkable sleeve 104 is preferably disposed around the chip module 101.

The first layer cladding/covering (body) can effectively strengthen the mechanical strength of the terminal 103 at both ends of the encapsulation body of the chip module 101, improve the impact resistance and tensile resistance of the product, and make the product more reliable and durable .

The covering layer 105 is made of two layers of unvulcanized natural rubber having a length of 100 mm, a width of 10 mm and a thickness of 0.5 to 1.5 mm. That is, the covering layer 105 is formed by laminating an upper cover layer and a lower cover layer, wherein the upper cover layer and the lower cover layer are respectively an unvulcanized natural rubber layer having a length of 100 mm, a width of 10mm, and a thickness of 0.5 to 1.5mm .

For the covering layer 105, the present example further adds a protective film to the surface thereof to further improve its performance.

The covering layer 105 thus structured is disposed outside of the encapsulation body of the chip module 101, the connection terminals 103 on both sides thereof and the antennas 102 on both sides thereof, and further covers the internal devices by a press-fix mechanism (that is, the chip module 101's encapsulation body, the connection terminals 103 and the antennas 102 are coated or enwrapped therein), to form a second layer cladding.

The implantable electronic tag for a tire thus constructed conforms to the standards HG/T 4953∼4956-2016 for the tire radio frequency identification (RFID) electronic tag mechanical implantation methods, performance test methods and coding. When used, data can continuously be written to the radio frequency tag through a dedicated/special RFID reader.

In view of the above described scheme of the implantable electronic tag for a tire, the present example also provides a quick and convenient assembly process, and the process for assembling the implantable electronic tag for a tire based on the process is as follows (see FIG. 1):
1. Encapsulating a radio frequency chip: the radio frequency chip is mold-encapsulated with high reliability to form a special mold encapsulation body, the size of which is preferably 1.55^{∗}2.65^{∗}1.05mm.
2. Connecting antennas: preferably, a pair of spring type antennas having a length of 38 mm, its antenna wire diameter of 0.25 mm, the spring diameter of 1.25 mm, and the screw pitch of 0.7 mm (the surface of the pair of spring-type antennas is provided with a copper-zinc alloy plating), and copper connection terminals (i.e. Copper cold-press connecting tube). When connected, the two copper connection terminals are respectively initially riveted to the two spring antennas (or pressed and fixed by a cold-pressing method), and then cold-press connected with the electrodes on the encapsulation body, wherein the cold-press process is as described above.
3. Heat shrinkable sleeve covering/cladding: two sides of the encapsulation body are connected to the antennas, preferably the heat shrinkable sleeve having an initial diameter of 3 mm and a length of 10 mm , surface of which is provided with a plurality of small holes, is sleeved on and the package and the copper terminals on both sides thereof, centering the package, and the package and the copper terminals at both ends thereof are covered by the heat shrinkable sleeve through a hot air shrinkage to form a coating body.
4. The assembly completed in said step 3 is placed in a centre symmetry manner onto the lower cover layer and secured to the surface of the lower cover layer by force (such as by hand or other force applying element),then, the upper cover layer is aligned with the lower cover layer, thus the assembly is completely covered therein; the upper and lower cover layers are tightly pressed and fixed for a suitable time by a plane press fix tool to remove air, a bonding between them is completed, and an implantable electronic tag for attire is constituted.

Through the above process, the assembly of the implantable electronic tag for a tire can be completed quickly and conveniently, which is not only efficient, but also has a high yield, and ensures mass production of the product.

### Example 2

This example provides an ultra high frequency read-write implantable electronic tag for a tire, and its overall scheme of the implantable electronic tag for a tire is identical to the implantable electronic tag for a tie in the above example 1, not to be repeated here. The differences between the both schemes are the two connection terminals in the tire implantable electronic tag according to the present example are adopted a metal press fit sheet to achieve connection of the electrodes of the radio frequency chip module and antenna by the metal press fit sheet.

Specifically, one end of the metal press fix piece is connected to the electrode of the antenna, and another end is connected to the electrode on the radio frequency chip module, and the two electrodes are enwrapped in the metal piece by a cold press means, and are fixed in a cold press style.

The metal press fix pieces here is a pre-compressed and shaped thin metal piece, is a structure with a structure of "middle in Chinese character" shape, connected with connecting ribs on the upper and lower positions, and is connected with other metal press fix pieces into a whole row structure. After a pressed and fix, the connecting ribs are cut off, and the left and right metal pieces are curved by a mechanical device, forming a surrounding or enwrap, for the electrodes of the radio frequency chip module and the electrodes of the antennas to be surrounded in the middle thereof, and then clamped tightly and fixed.

The implantable electronic tag for a tire thus constructed also conforms to the standards HG/T 4953-4956-2016 for radio frequency identification (RFID) electronic tag mechanical implantation methods, performance test methods and coding for a tire. When used, data can be continuously written to the RF tag through a dedicated RFID reader.

### Example 3

This example provides the other ultra high frequency readable-writable implantable electronic tag for a tire, and its overall scheme is identical to that of the implantable electronic tag for a tire in the example 1, not to be repeated here. The differences between both are that the electrodes of the radio frequency chip module and the electrodes of the antennas are connected by a laser welding or arc welding in the implantable electronic tag for a tire provided in this example.

Specifically, the electrodes of the radio frequency chip module are placed in the manner of stacking or overlaying on the electrodes of the antennas, welded and fixed by a laser welding or arc welding.

The tire-embedded electronic tag thus constructed also conforms to the standards HG/T 4953-4956-2016 for radio frequency identification (RFID) electronic tag mechanical implantation methods, performance test methods and coding for a tire. When used, data can be continuously written to the RF tag through a dedicated RFID reader.

The basic principles, main features, and advantages of the present invention have been shown and described above. It should be understood by those skilled in the art that the present invention is not limited by the foregoing embodiments, and that the foregoing embodiments and description of the present invention are only for describing principles of the present invention. Without departing from the spirit and scope of the invention, various changes and modifications are intended to be included within the scope of the invention as claimed. The scope of the invention is defined by the appended claims and their equivalent definitions.

## Claims

1. An implantable electronic tag for a tire, wherein the electronic tag comprising:
An antenna;
A radio frequency chip module having electrodes thereon; and
A connection terminal, one end of which is connected to the antenna at one end, and the other end is in cold-press and connection to the electrode of the radio frequency chip module.

2. An implantable electronic tag for a tire according to claim 1, wherein said antenna is a spring-type antenna.

3. An implantable electronic tag for a tire according to claim 1 or 2, wherein the surface of the antenna is provided with a copper-zinc alloy plating layer.

4. An implantable electronic tag for a tire of claim 1, wherein the radio frequency chip module is an integrated encapsulation structure.

5. An implantable electronic tag for a tire according to claim 1, wherein the connection terminal is in press-fix connection with the antenna through cold-pressing.

6. An implantable electronic tag for a tire according to claim 1 or 5, wherein the connection terminal is a cold-press connecting tube.

7. An implantable electronic tag for a tire according to claim 1 or 5, wherein the terminal is a metal press-fix piece , and the electrode of the antenna and the electrode on the radio frequency chip module are wrapped in the metal press-fix piece by cold-press method, and are fixed by the cold-press method.

8. An implantable electronic tag for a tire according to claim 7, wherein the metal press-fix piece is a pre-press forming metal piece, and has a structure of "middle in Chinese character" shape, and its upper and lower positions are connected with ribs, and are connected with other metal press-fix pieces in whole row structure, and the ribs are cut after the press-fix process; The two metal pieces in the left and right side are bent and by a mechanical device, and the electrodes of the chip and the electrodes of the antenna are surrounded, then clamped and fixed.

9. An implantable electronic tag for a tire according to claim 1, wherein the electronic tag further comprises a component/assembly for encapsulation, the encapsulation component enclosing the electronic tag.

10. An implantable electronic tag for a tire according to claim 9, wherein the encapsulation component comprises a covering/coating layer covering the antenna, the radio frequency chip module and the connection terminal.

11. An implantable electronic tag for a tire according to claim 10, wherein the covering layer is formed by laminating two layers of planar rubber layers.

12. An implantable electronic tag for a tire according to claim 11, wherein the covering layer is composed of natural rubber which has not been vulcanized, and a protective film is provided on the surface of the covering layer.

13. An implantable electronic tag for a tire according to any of claims 9 to 12, wherein the encapsulation component further includes a heat shrink sleeve that encloses the radio frequency chip module and the connection terminal in the electronic tag.

14. An implantable electronic tag for a tire according to claim 10, wherein a surface of the heat shrinkable sleeve is provided with a plurality of small holes.

15. An implantable electronic tag for a tire, wherein the electronic tag comprising an antenna and a radio frequency chip module, the radio frequency chip module having electrodes thereon , and the electrodes of the antenna and the radio frequency chip module are soldered and fixed for connection by laser welding or arc welding.

16. A tire implantable electronic label assembly process, wherein the process comprises:
Encapsulating the radio frequency chip to form a radio frequency chip module;
Connecting electrodes of the antenna and the encapsulation by a method of cold pressing;
A heat shrinkable sleeve being placed at the radio frequency chip module, and the heat shrinkable sleeve is heated by hot air to tightly encapsulate the radio frequency chip module and connection portions of the electrodes;
Positioning the finished component to the lower cover layer, symmetrizing their centers, and fixing them to the surface of the lower cover layer;
Aligning the upper cover layer with the lower cover layer to completely enwrap the component; and
The upper and lower cover layers being pressed tightly for a suitable time for completely bonding them.
